# FASCICULE DE BREVET EUROPEEN

(11) **EP 1 162 130 B1**
(45) Date de publication et mention de la délivrance du brevet: **17.03.2004**
(21) Numéro de dépôt: 01401487.2
(22) Date de dépôt: 08.06.2001
(51) Int. Cl.: B62D 55/10

(54) **Dispositif d'entraînement à chenille pour véhicule tout terrain**
Antriebsvorrichtung für Kettenfahrzeug
Drive mechanism for tracked vehicle

(30) Priorité: 09.06.2000 FR 0007440
(43) Date de publication de la demande: 12.12.2001
(73) Titulaire: Otico, 77650 Longueville (FR)
(72) Inventeur: Phely, Olivier, 77650 Sainte Colombe (FR)
(74) Mandataire: Bezault, Jean

(56) Documents cités:
- WO-A-99/54189
- DE-C- 497 672
- NL-C- 2 916
- US-A- 3 447 620
- US-A- 5 273 126

## Description

L'invention se rapporte à un dispositif d'entraînement à chenille pour les véhicules tout terrain, tels que les engins agricoles, viticoles et ostréicoles, ou encore les engins de travaux publics et forestiers.

Un dispositif selon le preambule de la revendication 1 est connu de FR 2 768 387.

On prévoit alors deux dispositifs d'entraînement qui sont montés de part et d'autre du châssis, soit dès l'origine, soit éventuellement en remplacement d'un autre équipement.

Dans les véhicules de ce type, la chenille peut être soit une chenille classique composée de maillons métalliques articulés, soit encore une chenille constituée par une bande souple sans fin, par exemple en matériau élastomère renforcé.

Dans les véhicules de ce type, chaque dispositif d'entraînement est habituellement monté oscillant autour d'un axe du châssis pour permettre à chacune des chenilles d'épouser la configuration du terrain sur lequel se déplace le véhicule. En outre, chacun des dispositifs est relié au châssis par des moyens de suspension qui sont généralement situés sous le châssis et dans la partie antérieure de celui-ci.

Ces dispositifs connus ont notamment pour inconvénient que la garde au sol du véhicule tout terrain est comparativement faible, ce qui fait que ces dispositifs sont mal adaptés pour certaines applications spécifiques, en particulier pour certains tracteurs agricoles ou viticoles qui doivent pouvoir "enjamber" certaines cultures.

Pour résoudre ce problème, il a déjà été proposé de surélever le châssis et d'entraîner chacune des chenilles par une roue d'entraînement déportée vers le haut par rapport à l'axe des roues principales. Toutefois, une telle solution ne permet pas de résoudre complètement le problème mentionné ci-dessus.

En effet, chacun des dispositifs d'entraînement à chenille doit être monté articulé, tout en étant relié au châssis par des organes de suspension qui sont une source d'encombrement.

En outre, la liaison de ces moyens de suspension au dispositif d'entraînement pose des difficultés du fait qu'il existe un déport vertical important entre le bâti du dispositif et le châssis du véhicule.

Par ailleurs, ces solutions connues ne permettent pas d'adapter le dispositif à la voie en largeur souhaitée pour le véhicule.

L'invention a notamment pour but de surmonter les inconvénients précités.

Elle propose à cet effet un dispositif d'entraînement à chenille selon la revendication 1.

Du fait que la poutre oscillante est reliée à un bras de suspension, par l'intermédiaire d'une biellette, et que ce bras de suspension est situé au-dessus de la poutre oscillante, donc déporté vers le haut, il est possible d'augmenter notablement la garde au sol du châssis du véhicule.

De plus, c'est ce bras de suspension, et non pas la poutre oscillante, qui est relié aux organes de suspension, ce qui permet de s'affranchir des problèmes d'une liaison de grande longueur entre la poutre oscillante et le châssis du véhicule.

Dans une première forme de réalisation de l'invention, la partie postérieure du bâti porte une roue d'entraînement calée sur un arbre moteur et autour de laquelle s'enroule la chenille.

Dans une deuxième forme de réalisation de l'invention, la roue principale portée par la partie postérieure du bâti est calée sur un arbre moteur de manière à former aussi une roue d'entraînement pour la chenille.

Ainsi, dans ce dernier cas, la partie postérieure du bâti supporte une seule roue jouant à la fois la fonction de roue principale et de roue d'entraînement.

Avantageusement, la partie postérieure du bâti est fixée à l'extrémité d'une barre transversale fixée horizontalement sous le châssis et formant le second pivot pour le bras de suspension. Ainsi, ce second pivot est sensiblement à la hauteur du châssis.

Il est avantageux que la partie postérieure du bâti soit en outre fixée à l'extrémité d'une poutre transversale s'étendant horizontalement sous le châssis. Il en résulte une liaison rigide entre le bâti du dispositif et le châssis du véhicule.

Dans la première forme de réalisation précitée, la partie postérieure du bâti comporte avantageusement une poutre sensiblement horizontale portant au moins une roue de support et supportant le premier pivot. Ainsi, la poutre oscillante se trouve articulée à cette poutre de support, en étant sensiblement dans son prolongement.

Selon une autre caractéristique de l'invention, la biellette est articulée en partie supérieure au bras de suspension et en partie inférieure à un support sensiblement vertical fixé à la poutre oscillante et présentant une hauteur choisie.

Ainsi, en choisissant la hauteur du support, on pourra adapter le dispositif en fonction du véhicule et de la garde au sol souhaitée.

Selon une autre caractéristique de l'invention, le bras de suspension a une extrémité antérieure reliée au châssis par l'intermédiaire d'un organe de suspension.

Dans une forme de réalisation préférée, l'extrémité antérieure du bras de suspension comporte une plaque dans laquelle est aménagée une fenêtre. L'organe de suspension est une suspension à lames fixée transversalement sous le châssis et dont une extrémité est reçue dans ladite fenêtre.

Avantageusement, la poutre oscillante comporte des moyens de mise en tension de la chenille.

Dans une forme de réalisation préférée de l'invention, la chenille est une bande souple sans fin formée avantageusement en un matériau élastomère renforcé et dotée intérieurement de plots d'entraînement.

Le dispositif de l'invention peut constituer un ensemble prêt à monter, encore appelé "kit", et susceptible d'être monté sur le châssis du véhicule, en remplacement d'une chenille à maillons articulés ou en remplacement d'une roue motrice ; le dispositif peut aussi constituer un ensemble monté dès l'origine sur le châssis.

Dans la description qui suit, faite seulement à titre d'exemple, on se réfère aux dessins annexés, sur lesquels :
- la figure 1 est une vue latérale d'un dispositif d'entraînement à chenille selon une première forme de réalisation de l'invention ;
- la figure 2 est une vue en coupe horizontale du dispositif de la figure 1 ;
- la figure 3 est une vue latérale du bras de suspension ;
- la figure 4 est une vue en coupe selon la ligne IV-IV de la figure 3 ;
- la figure 5 est une vue latérale d'un dispositif d'entraînement à chenille selon une deuxième forme de réalisation de l'invention ; et
- la figure 6 est une vue en coupe horizontale du dispositif de la figure 5.

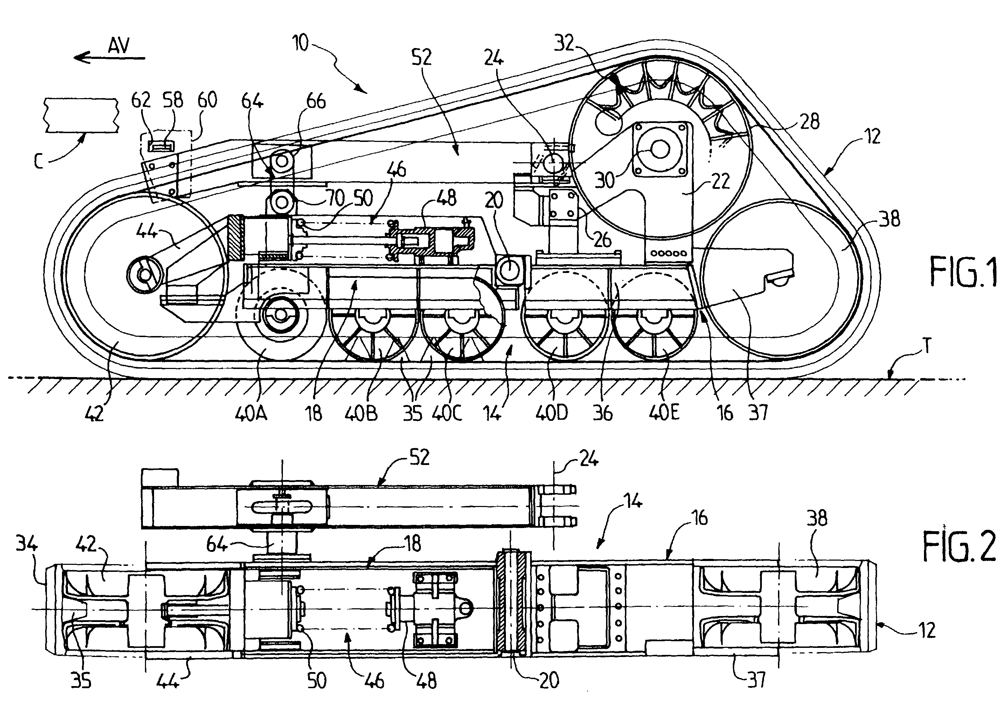

On se réfère d'abord aux figures 1 et 2 qui montrent un dispositif 10 d'entraînement à chenille 12 (dans l'exemple une chenille souple) pour un véhicule de type tout terrain tel que, par exemple, un tracteur agricole. Le dispositif 10 est propre à être monté latéralement sur le châssis C (représenté schématiquement) du véhicule. Ainsi, on comprendra qu'un tel véhicule est équipé, de chaque côté, de deux dispositifs 10 montés symétriquement.

Chaque dispositif 10 peut être prévu pour être monté dès l'origine sur le châssis du véhicule, ou bien constituer un ensemble prêt à monter, encore appelé "kit", susceptible d'être installé en lieu et place d'un autre équipement, par exemple d'un dispositif d'entraînement du type à chenille à maillons articulés, ou bien en remplacement d'une roue classique.

Le dispositif 10 comprend un bâti 14 ayant une partie postérieure 16 propre à être fixée sur le châssis C du véhicule et une partie antérieure 18 montée à pivotement sur la partie postérieure 16 autour d'un pivot transversal 20 situé à un niveau inférieur, c'est-à-dire aussi près que possible du niveau du terrain T sur lequel se déplace le véhicule.

La direction d'avance (marche avant) du véhicule est représentée par la flèche AV sur la figure 1.

La partie postérieure 16 comprend une embrasse coudée 22 dont l'une des branches est fixée d'une part à l'extrémité d'une barre transversale 24 (dans l'exemple une barre de section circulaire) fixée horizontalement sous le châssis C, et d'autre part, à l'extrémité d'une poutre transversale 26 (dans l'exemple une poutre de section carrée) s'étendant horizontalement sous le châssis C. On comprendra que la barre transversale 24 et la poutre transversale 26 sont fixées respectivement aux deux dispositifs d'entraînement prévus de chaque côté du châssis C.

L'embrasse 22 se trouve ainsi fixée fermement au châssis C. Elle porte une roue d'entraînement 28 qui est calée sur un arbre moteur 30 et autour de laquelle s'enroule la chenille 12. La roue 28 comprend deux jantes espacées réunies entre elles, à intervalles réguliers, par des taquets d'entraînement 32 (figure 1) disposés parallèlement entre eux à la périphérie de la roue et destinés à venir s'engrener avec l'intérieur de la bande souple sans fin 12.

Cette bande souple est réalisée avantageusement en un matériau élastomère, par exemple à base de caoutchouc naturel, renforcé intérieurement par des armatures (non représentées). La bande sans fin présente extérieurement une surface de roulement munie de crampons 34 (figure 2). La bande souple sans fin est munie intérieurement d'une rangée de plots 35 (figure 1) situés dans le sens de la longueur de la bande et distants entre eux d'un pas constant. Ces plots ont sensiblement la forme d'une pyramide, comme décrit dans le brevet FR-A-2 711 959 (93 13211) de la demanderesse.

Les taquets 32 de la roue d'entraînement 28 sont destinés à venir s'engrener dans les espaces vides délimités entre les plots 35 pour entraîner la chenille.

La partie postérieure 16 comporte en outre une poutre 36 sensiblement horizontale, fixée en partie inférieure du bras 22, et prolongée par une fourche 37 portant une roue principale 38 (roue postérieure) et deux roues support 40D et 40E.

La poutre 36 supporte, dans sa partie antérieure, le pivot 20 autour duquel est articulée la poutre oscillante 18.

Cette poutre 18 est sensiblement horizontale et se situe sensiblement dans le prolongement de la poutre 36. Elle porte trois autres roues de support 40A, 40B et 40C, ainsi qu'une autre roue principale 42 (roue antérieure). Comme on peut le voir sur la figure 1, les roues principales 38 et 42 ont sensiblement le même diamètre, lequel est supérieur à celui des roues de support 40A à 40E. La roue d'entraînement 28 se situe à un niveau supérieur à celui des axes des roues principales 38 et 42, si bien que la chenille 12 affecte, en vue de côté, une forme sensiblement triangulaire.

La roue principale 42 est portée par une fourche 44, elle-même fixée à un organe de liaison porté par un mécanisme tendeur et amortisseur 46 supporté par la poutre oscillante 18. Ce mécanisme comprend un vérin 48 et un ressort 50 et il permet de mettre sous tension la fourche 44 en sorte que la roue antérieure 42 joue le rôle de roue de mise en tension de la chenille. En outre, le ressort 50 joue le rôle d'amortisseur pour la chenille, lorsque celle-ci roule sur des obstacles. La structure générale de la poutre avec ses roues et son mécanisme tendeur et amortisseur est connue de façon générale par le brevet FR-A-2 768 387 (97 11398) au nom de la demanderesse.

Le dispositif 10 comprend en outre un bras de suspension 52 disposé sensiblement horizontalement au-dessus (à un niveau supérieur) de la poutre oscillante 18.

Ce bras de suspension est réalisé sous la forme d'un élément allongé creux, de section sensiblement carrée (figures 2, 3 et 4). Il comporte une extrémité postérieure 54 délimitant une cage dans laquelle est reçue une extrémité de la barre transversale 24 qui forme ainsi pivot pour le bras de suspension.

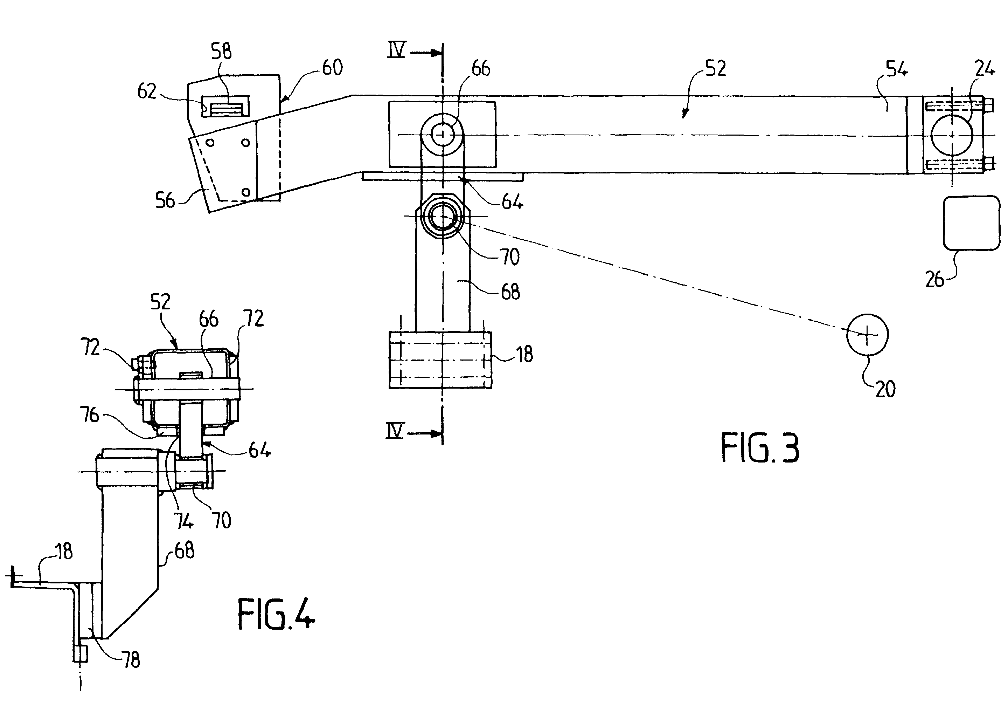

Le bras de suspension 22 comporte une extrémité antérieure 56 qui est reliée au châssis C par l'intermédiaire d'un organe de suspension 58. Comme on le voit plus particulièrement sur la figure 3, l'extrémité antérieure 56 de la poutre oscillante est solidaire d'une plaque 60 dans laquelle est aménagée une fenêtre 62 de forme générale rectangulaire. La plaque 60 est guidée verticalement par des moyens (non représentés) pour pouvoir se débattre librement en hauteur lorsque le bras de suspension oscille autour de son axe.

L'organe de suspension 58 est une suspension à lames, fixée transversalement sous le châssis C et dont une extrémité est reçue dans la fenêtre 62. Ainsi, les deux extrémités de l'organe de suspension à lames coopèrent respectivement avec deux fenêtres 62 appartenant aux deux dispositifs d'entraînement 10 prévus des deux côtés du châssis C. La fenêtre 62 possède des dimensions sensiblement supérieures à celles de la section transversale des lames, au niveau de leur passage dans la fenêtre, pour offrir un jeu de déplacement.

Le bras de suspension 52 est relié à la poutre oscillante 18 par l'intermédiaire d'une biellette 64. Cette dernière est disposée sensiblement verticalement. Elle est articulée, à sa partie supérieure, au bras de suspension 52 par l'intermédiaire d'un pivot 66 et, en partie inférieure, à un support 68 par l'intermédiaire d'un pivot 70. Les pivots 66 et 70 ont des axes parallèles entre eux et parallèles aux pivots 20 et 24. Ils sont sensiblement horizontaux et s'étendent transversalement par rapport à la direction longitudinale du châssis C du véhicule.

Le pivot 66 s'étend entre deux faces verticales opposées 72 du bras 52 (figure 4) et la biellette 64 passe au travers d'une fente de guidage 74 aménagée dans une face inférieure 76 du bras 52 (figure 4). Le pivot 70 fait saillie latéralement par rapport au support 68 (figure 4), lequel s'étend sensiblement verticalement et il est fixé à la poutre oscillante 18. Ce support 68 peut être réalisé avec une hauteur choisie pour permettre d'adapter le dispositif au véhicule considéré et en fonction de la garde au sol (hauteur libre sous le châssis C) du véhicule.

Comme on peut le voir également sur la figure 4, le support 68 est fixé, à son extrémité inférieure, sur la poutre oscillante 18 par l'intermédiaire d'un intercalaire 78 dont l'épaisseur peut varier, ce qui permet de déporter plus ou moins le bras de suspension par rapport au châssis C et, ainsi, de modifier la voie (en largeur) des deux chenilles. Comme on peut le voir sur la figure 2, la chenille 12 s'étend extérieurement par rapport au bras de suspension 52, lequel est lui-même fixé sur le châssis.

Ainsi, en modifiant l'épaisseur de l'intercalaire 78, on peut écarter plus ou moins la chenille par rapport au châssis et modifier en conséquence la voie disponible entre les deux chenilles.

On comprendra que la biellette 64 permet de compenser la différence d'un premier rayon (défini entre les pivots 24 et 66) et d'un second rayon (défini entre les pivots 20 et 70) comme on peut le voir sur la figure 3. En outre, la biellette contribue au maintien latéral de la poutre oscillante 18.

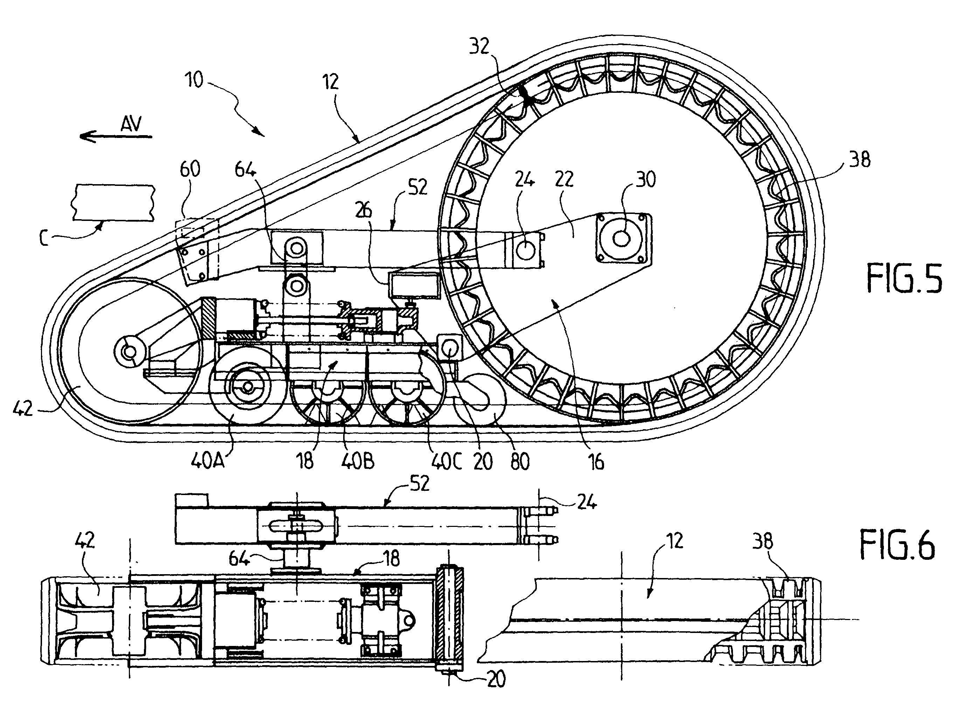

On se réfère maintenant aux figures 5 et 6 pour décrire un dispositif selon une autre forme de réalisation de l'invention. Les éléments communs avec ceux de la forme de réalisation précédente sont désignés par les mêmes références numériques.

Dans le dispositif des figures 5 et 6, la roue principale postérieure 38 portée par la partie postérieure 16 du bâti est calée sur l'arbre moteur 30 et remplit ainsi à la fois la fonction de roue principale et celle de roue d'entraînement. La roue principale postérieure 38 est munie à cet effet de taquets 32 analogues à ceux de la roue d'entraînement 28 décrite précédemment. La roue principale postérieure 38 présente ici un diamètre très supérieur à celui de la roue principale antérieure 42.

La partie postérieure 16 du bâti possède une configuration différente de celle de la forme de réalisation précédente. Elle se réduit ici à une embrasse 22 en forme de bras qui est fixée à la fois à la barre transversale 24 et à la poutre transversale 26. Une des extrémités de cette embrasse est traversée par l'arbre moteur 30 de la roue 38, tandis que son autre extrémité porte le pivot 20 qui sert à l'articulation de la partie antérieure 18 en forme de poutre oscillante. De plus, la partie postérieure 16 ne porte pas de roues de support.

Dans ce cas la partie antérieure 18 est sensiblement identique à celle de la forme de réalisation précédente. Elle porte trois roues de support 40A, 40B et 40C, ainsi qu'une roue intercalaire 80 de plus petit diamètre que les roues de support, qui est disposée entre la roue de support 40C et la roue principale postérieure 38. Pour le reste, la structure et le fonctionnement du dispositif des figures 5 et 6 sont analogues à ceux du dispositif des figures 1 à 4.

Le dispositif de l'invention peut constituer un ensemble prêt à monter, ou "kit, pour remplacer un équipement d'origine, par exemple un équipement à chenille à maillons métalliques articulés. Il peut s'agir aussi d'un équipement monté d'origine sur le châssis d'un véhicule.

Bien entendu, l'invention n'est pas limitée aux formes de réalisation décrites précédemment à titre d'exemple et s'étend à d'autres variantes.

Ainsi, il est envisageable d'appliquer les enseignements de l'invention à une chenille composée de maillons métalliques articulés.

## Revendications

1. Dispositif d'entraînement à chenille pour véhicule tout terrain, comprenant un bâti (14) propre à être installé sur le côté d'un châssis (C) du véhicule et portant deux roues principales (38, 42) et des roues de support (40A-40E) autour desquelles s'enroule la chenille (12),
le bâti (14) comprenant une partie postérieure (16) propre à être fixée sur le châssis (C) du véhicule et portant l'une (38) des roues principales, ainsi qu'une partie antérieure réalisée sous la forme d'une poutre oscillante (18) sensiblement horizontale portant l'autre roue principale (42) **caractérisé en ce que** la partie antérieure porte aussi l'une au moins (40D, 40E) des roues de support, qu'elle est montée à pivotement sur la partie postérieure (16) autour d'un premier pivot transversal (20) situé à un niveau inférieur, et **en ce qu'**il est prévu en outre un bras de suspension (52) sensiblement horizontal, disposé au dessus de la poutre oscillante (18), relié à cette dernière par une biellette (64) et monté à pivotement autour d'un second pivot transversal fixé sur le chassis (C) et (24) disposé à un niveau supérieur, sensiblement à la hauteur du châssis.

2. Dispositif selon la revendication 1, **caractérisé en ce que** la partie postérieure (16) du bâti (14) porte une roue d'entraînement (28) calée sur un arbre moteur (30) et autour de laquelle s'enroule la chenille (12).

3. Dispositif selon la revendication 1, **caractérisé en ce que** la roue principale (38) portée par la partie postérieure (16) du bâti (14) est calée sur un arbre moteur (30) de manière à former aussi une roue d'entraînement pour la chenille (12).

4. Dispositif selon l'une des revendications 1 à 3, **caractérisé en ce que** la partie postérieure (16) du bâti (14) est fixée à l'extrémité d'une barre transversale (24) fixée horizontalement sous le châssis (C) et formant le second pivot pour le bras de suspension (52).

5. Dispositif selon la revendication 4, **caractérisé en ce que** la partie postérieure (16) du bâti (14) est en outre fixée à l'extrémité d'une poutre transversale (26) s'étendant horizontalement sous le châssis (C).

6. Dispositif selon l'une des revendications 1, 2, 4 et 5, **caractérisé en ce que** la partie postérieure (16) du bâti (14) comporte une poutre sensiblement horizontale (36) portant au moins une roue de support (40D, 40E) et supportant le premier pivot (20).

7. Dispositif selon l'une des revendications 1 à 6, **caractérisé en ce que** la biellette (64) est articulée en partie supérieure au bras de suspension (52) et en partie inférieure à un support sensiblement vertical (68) fixé à la poutre oscillante (18) et présentant une hauteur choisie.

8. Dispositif selon l'une des revendications 1 à 7, **caractérisé en ce que** le bras de suspension (52) a une extrémité antérieure (56) reliée au châssis (C) par l'intermédiaire d'un organe de suspension (58).

9. Dispositif selon la revendication 8, **caractérisé en ce que** l'extrémité antérieure (56) du bras de suspension (52) comporte une plaque (60) dans laquelle est aménagée une fenêtre (62), et **en ce que** l'organe de suspension (62) est une suspension à lames fixée transversalement sous le châssis (C) et dont une extrémité est reçue dans ladite fenêtre (62).

10. Dispositif selon l'une des revendications 1 à 9, **caractérisé en ce que** la poutre oscillante (18) comporte des moyens (44, 46) de mise en tension de la chenille (12).

11. Dispositif selon l'une des revendications 1 à 10, **caractérisé en ce que** la chenille (12) est une bande souple sans fin formée avantageusement en un matériau élastomère renforcé et dotée intérieurement de plots d'entraînement (35).

12. Dispositif selon l'une des revendications 1 à 11, **caractérisé en ce qu'**il constitue un ensemble prêt à monter, ou kit, susceptible d'être monté sur le châssis (C) du véhicule en remplacement d'une chenille à maillons articulés ou en remplacement d'une roue motrice.

13. Dispositif selon l'une des revendications 1 à 11, **caractérisé en ce qu'**il constitue un ensemble monté dès l'origine sur le châssis (C) du véhicule.

## Patentansprüche

1. Antriebsvorrichtung für ein Geländekettenfahrzeug, die eine Rahmen (14) aufweist, der geeignet ist, auf der Seite eines Fahrgestells (C) des Fahrzeugs angebracht zu werden, und der zwei Haupträder (38, 42) und Stützräder (40A-40E) trägt, über die die Kette (12) läuft, wobei der Rahmen (14), der einen hinteren Abschnitt (16) aufweist, der zur Befestigung auf dem Fahrgestell (C) des Fahrzeugs geeignet ist und eines (38) der Haupträder trägt, sowie einen vorderen Abschnitt aufweist, der in Form eines im wesentlichen waagerechten, schwingenden Trägers (18) ausgeführt ist, der das andere Hauptrad (42) trägt,
**dadurch gekennzeichnet, daß**
der vordere Abschnitt auch mindestens eines der Stützräder (40D, 40E) trägt, so daß es schwenkbar auf dem hinteren Abschnitt (16) um ein erstes quer laufendes Schwenklager (20) angebracht ist, das auf einer unteren Ebene liegt,
und daß darüber hinaus ein im wesentlichen waagerechter Tragarm (52) vorgesehen ist, der über dem schwingenden Träger (18) angeordnet ist, mit dem letzteren über einen Schwingarm (64) verbunden ist, und der schwenkbar um ein zweites quer laufendes Schwenklager (24) angebracht ist, das auf dem Fahrgestell (C) befestigt ist und auf einem höheren Niveau, im wesentlich auf Höhe des Fahrgestells, angeordnet ist,.

2. Vorrichtung gemäß Anspruch 1, **dadurch gekennzeichnet, daß** der hintere Abschnitt (16) des Rahmens (14) ein Antriebsrad (28) trägt, das auf einer Antriebswelle (30) verkeilt ist und um das die Kette (12) läuft.

3. Vorrichtung nach Anspruch 1, **dadurch gekennzeichnet, daß** das Hauptrad (38), das durch den hinteren Abschnitt (16) des Rahmens (14) getragen ist, auf einer Antriebswelle (30) derart verkeilt ist, daß es auch ein Antriebsrad für die Kette (12) bildet.

4. Vorrichtung nach einem der Ansprüche 1 bis 3, **dadurch gekennzeichnet, daß** der hintere Abschnitt (16) des Rahmens (14) am Ende eines Querträgers (24) befestigt ist, der waagerecht unter dem Fahrgestell (C) befestigt ist und das zweite Schwenklager für den Tragarm (52) bildet.

5. Vorrichtung gemäß Anspruch 4, **dadurch gekennzeichnet, daß** der hintere Abschnitt (16) des Rahmens (14) darüber hinaus am Ende eines schwingenden Trägers (26) befestigt ist, der sich waagerecht unter dem Fahrgestell (C) erstreckt.

6. Vorrichtung nach einem der Ansprüche 1, 2, 4 und 5, **dadurch gekennzeichnet, daß** der hintere Abschnitt (16) des Rahmens (14) einen im wesentlichen waagerechten Träger (36) aufweist, der mindestens ein Stützrad (40D, 40E) trägt und das erste Schwenklager (20) stützt.

7. Vorrichtung nach einem der Ansprüche 1 bis 6, **dadurch gekennzeichnet, daß** der Schwingarm (64) im oberen Abschnitt am Tragarm (52) und im unteren Abschnitt am im wesentlichen senkrechten Träger (68) angelenkt ist, der am schwingenden Träger (18) befestigt ist und eine gewählte Höhe aufweist.

8. Vorrichtung nach einem der Ansprüche 1 bis 7, **dadurch gekennzeichnet, daß** der Tragarm (52) ein vorderes Ende (56) aufweist, das mit dem Fahrgestell (C) mittels eines Aufhängungsmittels (58) verbunden ist.

9. Vorrichtung nach Anspruch 8, **dadurch gekennzeichnet, daß** das vordere Ende (56) des Tragarms (52) eine Platte (60) aufweist, in der ein Fenster (62) angeordnet ist, und dadurch, daß das Aufhängungsmittel (58) eine Blattfederung ist, die quer unter dem Fahrgestell (C) befestigt ist und deren eines Ende in besagtem Fenster (62) aufgenommen ist.

10. Vorrichtung nach einem der Ansprüche 1 bis 9, **dadurch gekennzeichnet, daß** der schwingende Träger (18) Mittel (44, 46) zum Spannen der Kette (12) aufweist.

11. Vorrichtung nach einem der Ansprüche 1 bis 10, **dadurch gekennzeichnet, daß** die Kette (12) ein flexibles endloses Band ist, das vorteilhafterweise aus einem verstärkten Elastomermaterial gebildet ist und innen mit Antriebsstiften (35) ausgestattet ist.

12. Vorrichtung nach einem der Ansprüche 1 bis 11, **dadurch gekennzeichnet, daß** sie eine montagebereite Einheit oder Kit bildet, geeignet, um auf dem Fahrgestell (C) des Fahrzeugs als Ersatz einer Kette mit Gelenkgliedern oder als Ersatz eines Antriebsrades montiert zu werden.

13. Vorrichtung nach einem der Ansprüche 1 bis 11, **dadurch gekennzeichnet, daß** sie eine Anordnung bildet, die von Anfang an auf dem Fahrgestell (C) des Fahrzeugs montiert ist.

## Claims

1. Crawler drive device for an all terrain vehicle, comprising a frame (14) suitable for installing on the side of a chassis (C) of the vehicle and carrying two principal wheels (38, 42) and support wheels (40A-40E) around which the crawler (12) is wound, the frame (14) comprising a rear part (16) suitable for being secured onto the chassis (C) of the vehicle and bearing one of the principal wheels (38), as well as a front part in the form of a substantially horizontal oscillating beam (18) bearing the other principal wheel (42), **characterised in that** the front part also carries at least one of the support wheels (40D, 40E) which is pivotally mounted on the rear part (16) about a first transverse pivot (20) situated at a lower level, and **in that**, in addition, a substantially horizontal suspension arm (52) is provided, arranged above the oscillating beam (18), connected to the latter by a small connecting rod (64) and pivotally mounted around a second transverse pivot, secured to the chassis (C) and at a higher level, substantially at the height of the chassis.

2. Device according to claim 1, **characterised in that** the rear part (16) of the frame (14) carries a drive wheel (28) fitted on to an engine arm (30) and around which the crawler (12) is wound.

3. Device according to claim 1, **characterised in that** the principal wheel (38) carried by the rear part (16) of the frame (14) is fitted on to an engine arm (30) in such a way as to also form a drive wheel for the crawler (12).

4. Device according to one of claims 1 to 3, **characterised in that** the rear part (16) of the frame (14) is fixed to the end of a transverse bar (24) secured horizontally under the chassis (C) and forming the second pivot for the suspension arm (52).

5. Device according to claim 4, **characterised in that** this rear part (16) of the frame (14) is, in addition, fixed to the end of a transverse beam (26) extending horizontally under the chassis (C).

6. Device according to one of claims 1, 2, 4 and 5, **characterised in that** the rear part (16) of the frame (14) comprises a substantially horizontal beam (36) carrying at least one support wheel (40D, 40E) and supporting the first pivot (20).

7. Device according to one of claims 1 to 6, **characterised in that** the upper part of the small connecting rod (64) is connected to the suspension arm (52) and the lower part is connected to a substantially vertical support (68) fixed to the oscillating beam (18) and having a selected height.

8. Device according to one of claims 1 to 7, **characterised in that** the suspension arm (52) has a front end (56) connected to the chassis (C) by means of a suspension member (58)

9. Device according to claim 8, **characterised in that** the front end (56) of the suspension arm (52) comprises a plate (60) in which a window (62) is arranged, and **in that** the suspension member (62) is a leaf spring suspension secured transversely under the chassis (C) and an end of which is received in the said window (62).

10. Device according to one of claims 1 to 9, **characterised in that** the oscillating beam (18) comprises means (44, 46) for tensioning the crawler (12).

11. Device according to one of claims 1 to 10, **characterised in that** the crawler (12) is a flexible loop belt advantageously made from a reinforced elastomeric material and equipped with drive blocks (35).

12. Device according to one of claims 1 to 11, **characterised in that** it forms a ready to assemble unit, or kit, capable of being mounted onto the chassis (C) of the vehicle in place of a crawler with articulated chains, or in place of a drive wheel.

13. Device according to one of claims 1 to 11, **characterised in that** it forms an assembly fitted, from the start, on to the chassis (C) of the vehicle.
